(19) Europäisches Patentamt
European Patent Office
Office européen des brevets

(11) **EP 3 646 100 B1**

(12) **EUROPEAN PATENT SPECIFICATION**

(45) Date of publication and mention
of the grant of the patent:
**11.08.2021   Bulletin 2021/32**

(21) Application number: **18737558.9**

(22) Date of filing: **28.06.2018**

(51) Int Cl.:
*G02B 7/02* (2021.01)          *G02B 7/09* (2021.01)
*G02B 13/00* (2006.01)        *G02B 13/02* (2006.01)
*G02B 3/00* (2006.01)          *G02B 3/12* (2006.01)
*G02B 3/14* (2006.01)          *G02B 26/08* (2006.01)
*H04N 5/247* (2006.01)        *G02B 27/64* (2006.01)

(86) International application number:
**PCT/EP2018/067510**

(87) International publication number:
**WO 2019/002523 (03.01.2019 Gazette 2019/01)**

(54) **A MODULE WITH A PLURALITY OF CAMERAS FOR INTEGRATION IN A MOBILE DEVICE**

MODUL MIT EINER VIELZAHL VON KAMERAS ZUR INTEGRATION IN EINE MOBILE VORRICHTUNG

MODULE À CAMÉRAS MULTIPLES DESTINÉ À ÊTRE INTÉGRÉ DANS UN DISPOSITIF MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017   EP 17179041**

(43) Date of publication of application:
**06.05.2020   Bulletin 2020/19**

(73) Proprietor: **poLight ASA**
**3188 Horten (NO)**

(72) Inventors:
• **TALLARON, Nicolas**
  **F-69250 Neuville sur Saône (FR)**

• **HAKOLA, Manu**
  **FI-37470 Vesilahti (FI)**
• **CRAEN, Pierre**
  **B-4035 Embourg (BE)**

(74) Representative: **Plougmann Vingtoft a/s**
**Strandvejen 70**
**2900 Hellerup (DK)**

(56) References cited:
**WO-A1-2014/147060          WO-A1-2014/147060**
**WO-A1-2015/058157          WO-A1-2015/058157**
**US-A1- 2005 253 951**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to mobile devices, or more specifically to camera modules for such devices.

BACKGROUND OF THE INVENTION

Cameras or camera modules for mobile phones or other types of mobile devices have expanded rapidly over the last decade. Such cameras or modules are pushed to ever-higher resolution, improved dynamic range, improved auto focusing and other optical parameters. While the demands for performance are increasing, so is the push for miniaturizing the actual camera module, since e.g. mobile phone manufactures seek to produce ever-slimmer devices. At the same time, there is an ongoing desire to achieve zoom capabilities in these camera modules.

US2005/253951 A1 discloses camera modules with different effective focal lengths.

WO2014/147060A1 discloses a camera module with a tunable lens based on a deformable lens body.

WO2015/058157A1 describes methods and apparatus for controlling the read out of rows of pixel values from sensors corresponding to different optical chains used to capture portions of the same image area are described. In some embodiments the readout is controlled based on user input and/or determinations with regard to the rate of motion in captured images or portions of captured images. For a low rate of motion the readout rate of a sensor corresponding to a small focal length maybe slowed down while the pixel row readout rate of one or more sensors corresponding to one or more optical chains have larger focal lengths are allowed to proceed at a normal rate. In some embodiments, for a high rate of motion, the read out rate of the sensor corresponding to the optical chain having the smaller focal length is allowed to proceed at the normal rate.

Auto focusing and zoom require the ability to adjust positions of lenses in a lens stack with a high precision over relatively large distances, and require complex and bulky solution which particularly for compact camera modules for mobile devices is technologically challenging or not acceptable. There has been attempts to create zoom with tuneable lenses where instead of creating optical power variation by moving a lens or a group of lenses in a lens structure (classical way of realising a zoom function) based on tuneable lenses, e.g. as marketed by the French company Varioptic), but those solutions are still bulky and not compatible with the mobile trend requirement of slimmer and slimmer mobile phone (i.e: for a 5M pixel, ¼ inch i.e. 6.35mm sensor, solution was as long as 25 to 30 mm). With the evolution of digital image processing, one demonstrated solution to create zoom functionality has been to combine 2 cameras that have different field of view, such as a short and a long effective focal lens, respectively. One example of such a dual-camera design was presented by Corephotonics (http://corephotonics.com/news-posts/omnivision-corephotonics-announce-dual-camera-zoom-reference-design-smartphones/).

Generally, such camera module needs focusing capabilities to capture images in focus and in general to achieve a good image quality. Therefore, especially for the long effective focal length (EFL) camera module, the range of adjustment of the lens, or "stroke" must be substantial for the long EFL lens/camera.

It is relatively easy to realise a solution that will offer the capability of creating a good zoom ratio, (i.e. 3 or 5 x ratio zoom), however, especially the long effective focal lens camera will be relatively bulky and long (i.e.: a short EFL could be in the range of 3mm while the long effective focal length will be in the range of 9 to 15mm length typically for a 1/3 inch i.e. 8.47mm sensor format). The short EFL camera will correspond to a thin camera module compatible with the actual mobile phone size or thickness limit of 5 to 6mm, but the long effective focal length will be not compatible with these requirements. While there are ways to reduce the total thickness of the long effective focal length by using a conventional telephoto lens design, such a solution would add complexity and still not achieved the 5 to 6 mm requirement mechanical length.

It is known that for a given focus distance capability in the object space of 5 dioptres, the equivalent stroke of the lens displacement will be in the range of EFL x EFL x 5 dioptre which is for a 15mm EFL in the range of 1mm.

Camera modules using voice coil motor (VCM) technology is known to provide auto focusing, but achieving the required stroke for zoom capabilities (in the range of millimetres) pose several problems, e.g., with regards to achieving an adequate optical axis stability and a sufficiently fast speed of focus, due to the long required stroke. VCM technology is inherently subject to magnetic interference, and will show a significant increase in power consumption when increasing stroke.

Hence, an improved camera module would be advantageous, and in particular a more efficient, compact and/or reliable zoom enabled camera module would be advantageous.

OBJECT OF THE INVENTION

An object of the present invention is to provide an alternative to the prior art.

In particular, it may be seen as a further object of the present invention to provide a camera module that solves the above mentioned problems of the prior art with regards to achieve a compact module that provides both auto focus and zoom capabilities, for integration in mobile devices.

SUMMARY OF THE INVENTION

Thus, the above described object and several other objects are intended to be obtained in a first aspect of the invention by providing a module with a plurality of cameras for integration in a mobile phone. The module comprises a first camera assembly, comprising a first image sensor and a first lens assembly. The first lens assembly is configured for having a first effective focal length, $EFL_1$. The first camera assembly defines a first optical axis and a first sensor axis, the first sensor axis is substantially normal to the first image sensor. The module further comprises a second camera assembly comprising a second image sensor and a second lens assembly. The second lens assembly is configured for having a second effective focal length, $EFL_2$. The second camera assembly defines a second optical axis and a second sensor axis, the second sensor axis being substantially normal to the second image sensor. The first effective focal length is shorter than the second effective focal length, $EFL_1 < EFL_2$. The second camera assembly comprises a folding mirror adapted to fold the second optical axis between the second lens assembly and the second image sensor. Lastly, the module comprising a mechanical frame arranged to carry the first camera assembly and the second camera assembly such that the first optical axis and the second optical axis are substantially parallel in an object space. The first lens assembly or the second lens assembly comprises a tuneable lens having an adjustable effective focal length, the tuneable lens comprising a transparent layer having chosen flexibility, an actuator configured to bend the transparent layer, and a deformable lens body being positioned in contact with the transparent layer at a first surface of the deformable lens body. The tuneable lens (in the following also referred to as a "transparent optical device element") as described here is exceptionally well-suited for this application due to the very compact actuator and high stability obtainable in the optical axis. Examples of such a lens is further described in international patent application PCT/EP2014/055391 by the present applicant. Particularly, this configuration enables that, a long effective focal length lens ("long lens") and a short effective focal length lens ("short lens") sharing a same direction of view may be arranged in a compact manner, which is highly attractive e.g. for mobile devices. For instance, such an arrangement may be used together with digital image processing to give zoom capabilities by interpolating image data between a wide angle image, taken with the short lens, and a narrow angle image, taken with the long lens. That is, the two camera assemblies share the same scenery, such that preferably, the field of view of the long lens is fully within the field of view of the short lens. The tuneable lens provides auto focusing in a very compact footprint, meaning that the two cameras may be space closely together, both to limit the required space within the mobile phone, and to limit the parallax error between the two. Folding the optical axis of the second camera assembly ensures that the second image sensor may be arranged sufficiently far away from the second lens assembly to enable use of the long effective focal length, without increasing the required thickness of the camera module and thus the mobile phone.

More specifically, in a first aspect of the invention, such as according to an embodiment of the first aspect of the invention, there is provided a module with a plurality of cameras for integration in a mobile phone, the module comprising:

- a first camera assembly, comprising a first image sensor and a first lens assembly, the first lens assembly being configured for having a first effective focal length, $EFL_1$, the first camera assembly defining a first optical axis and a first sensor axis, the first sensor axis being substantially normal to the first image sensor,
- a second camera assembly comprising a second image sensor and a second lens assembly, the second lens assembly being configured for having a second effective focal length, $EFL_2$, the second camera assembly defining a second optical axis and a second sensor axis, the second sensor axis being substantially normal to the second image sensor, wherein the first effective focal length is shorter than the second effective focal length, $EFL_1 < EFL_2$, the second camera assembly comprising a folding mirror adapted to fold the second optical axis between the second lens assembly and the second image sensor,
- a mechanical frame arranged to carry the first camera assembly and the second camera assembly such that the first optical axis and the second optical axis are substantially parallel in an object space, wherein

the first lens assembly or the second lens assembly comprises a tuneable lens having an adjustable effective focal length, the tuneable lens comprising a transparent layer having chosen flexibility, an actuator configured to bend the transparent layer, and a deformable lens body being positioned in contact with the transparent layer at a first surface of the deformable lens body,
wherein the second camera assembly comprises two or more folding mirrors.
An advantage of having two folding mirrors may be that an even longer effective focal length camera assembly may be wrapped around a perimeter of the first camera assembly, to achieve compact module. A more compact module with a plurality of cameras may be achieved.

In the context of the present application, a camera is to be understood as an device comprising an optical assembly for imaging an object space into an image space (such as a lens, an objective, or an aperture) and an image sensor arranged in the image space of the optical assembly to record the image. A camera will furthermore comprise a mechanical structure or frame to maintain the interrelation between the optical assembly and the image sensor. The raw signal detected by the image sensor is commonly processed into image information by electronic processing, either in a dedicated processor, a general purpose processor, or a combination of both. Some dedicated processors may also enable processing of raw signals from two or more image sensors simultaneously or alternately.

In an embodiment of the module according to the invention, the two or more folding mirrors of the second camera assembly are arranged for folding the second optical axis around the first camera assembly. This may be advantageous, since it may allow that a more compact module with a plurality of cameras may be achieved. By "folding ... around" may be understood that a line can be drawn between different parts of the optical axis of the second camera assembly, which line intersects the first camera assembly. This may be advantageous for achieving compactness since then space inside the second camera assembly can be utilized, at least partially, for the first camera assembly.

In an embodiment of the module according to the invention, the two or more folding mirrors of the second camera assembly are arranged so that segments of the optical axis of the second camera assembly span a three-dimensional space. An advantage of this may be that it enables utilizing 3-dimensions thereby giving 1-2 other degree(s) of freedom enabling a more compact design.

In an embodiment of the module according to the invention, a largest distance from

- a first intersection between the second optical axis and the second lens assembly, such as the first point of contact between the optical axis and the lens assembly (such as the first point of contact between the optical axis and the first optical element of the second lens assembly) for a photon moving along the optical axis from outside of the second lens assembly and into the second lens assembly, and
- a second intersection between the second optical axis and the second image sensor,

is less than, such as less than 99 %, such as less than 98 %, such as less than 95 %, such as less than 90 %, such as less than 80 %, such as less than 75 %, such as less than 70 %, such as less than 60 %, such as less than 50 %, such as less than 40 %, such as less than 30 %, such as less than 25 %, such as less than 20 %, such as less than 10 %, of a distance given by $\sqrt{\frac{1}{2} * EFL_2^{\ 2}}$.

The first intersection may in general be any intersection between the second optical axis and the second lens assembly, but it is defined by being the intersection with the largest distance to the second intersection. The first intersection may be, such as may typically be, the first point of contact between the optical axis and the lens assembly, such as the first point of contact between the optical axis and the first optical element of the second lens assembly, for a photon moving along the optical axis from outside of the second lens assembly and into the second lens assembly. In another embodiment, said largest distance may be replaced with a largerst distance between two points on the second optical axis within the second lens assembly.

This embodiment may be seen as quantifying the possible advantage of the second mirror (if the bending is done desirably), namely for example that the beeline distance between the entry point (at the lens) of the optical ray and the end point (at the image sensor) is closer than what can be achieved by a single mirror or multiple mirrors, which do not bend the optical ray "back" (so that different segments of the optical path have components being anti-parallel) or out of plane. This may entail that the entire module can be kept compact.

In an embodiment of the module according to the invention, the at least one deformable lens body is made from a non-fluid elastic material. Since the lens body is non-fluid, no tight enclosure is needed to hold the lens body, and there are no risk of leakage. In one such embodiment, the lens body is made from a soft polymer, which may include a number of different materials, such as silicone, polymer gels, a polymer network of cross-linked or partly cross-linked polymers, and a miscible oil or combination of oils. Using a soft polymer makes it possible to produce lenses where the polymer is in contact with air, thus requiring much less force when adjusting the focal length of the lens. It also eases the production, as the polymer will keep in place even if the different production steps are localized in different positions or facilities. This also makes it possible to provide leakage channels or bubbles of compressible gas in order to reduce the required force necessary to adjust the lens and to reduce the strains caused by temperature and pressure fluctuations in the environment.

In some embodiments, the deformable lens body comprises a polymer network of cross-linked or partly cross-linked polymers and a miscible oil or combination of oils, thereby increasing the refractive index of said polymer network of cross-linked or partly cross-linked polymers.

In an embodiment, the deformable lens body has

(a) an elastic modulus larger than 300 Pa, thereby avoiding deformation due to gravitational forces in normal operation of said transparent optical device element;

(b) the refractive index is above 1.35 ;

(c) the absorbance in the visible range is less than 10% per millimetre thickness of said deformable lens body.

To keep the lens body in place, and to focus its deformation to the regions just under the cover membrane, the lens assembly may further comprises structural elements adapted to restrain the change of shape of a part of the lens body opposite the cover membrane. These structural elements may be located on the back window and in contact with the lens body.

These structural elements may be one or more rods or pillars of a material having a refractive index identical or similar to the lens body. However, the structural element has a different material parameter, e.g. a Young's modulus higher than the lens body.

In some embodiments, these structural elements may be central members positioned within or adjacent to the lens body and on the optical axis. The central member may cause the lens body to provide a radial variation in reaction forces from the lens body when the bendable transparent cover member is actuated in the second direction, the reaction forces decreasing with increasing radius. This radial variation may be a result of:

- a variation in the stiffness of the lens body, in which case the central member may be part of the lens body having a different material parameter (e.g. Young's modulus);
- a object different from and stiffer than the lens body positioned within the lens body and centred on the optical axis;
- a radial variation in the thickness of the lens body caused by a central member being stiffer than the lens body and positioned below the lens body to impress a centre-symmetric concave shape in the end of the lens body facing the back window.

The effect of all these implementations is that the central part of the lens body will feel stiffer when pushed at from above, and this stiffer 'core' of the lens body is a pivot point and support for the central region of the lens cover.

The actuators may be different type of actuators, e.g. piezoelectric actuators, having the function of shaping the bendable transparent cover member so as to provide focus adjustment and image stabilisation.

Another type of actuators may preferably each involve a coil and a magnet, and the addressing of an actuator involves drawing a current through the coil.

The back window is in contact with lens body.

The surface of the back window opposite the lens body may be concave or convex and improve the (de)focusing effect of the lens. The back window is preferably of high optical quality and preferably made from glass or regular optical plastic like polycarbonate.

The back window may form the cover glass for a device involving the lens assembly, such as a mobile phone camera. This will reduce the number of layers and improve the optical quality by reducing flare and improving transmittance. The back window may have an anti-reflect coating (ARC) and also provide an IR filter function, possibly combined with filtering properties of the lens body or of the bendable transparent cover member.

The back window is preferably a plane, transparent substrate of e.g. $SiO_2$ or glass. The back window preferably has a flat surface facing the lens body. The opposite surface facing away from the lens body may be flat or may have a convex or concave, e.g. spherical shape to constitute a backside of the lens. In other embodiments, however, the back window might be a curved substrate, such as a spherical surface section as well as aspheric shape.

In another embodiment, the back window forms part of a transparent substrate of a touch screen. Such touch screens are standard in many electronic devices, such as mobile phones, tablets, computer monitors, GPS, media players, watches, etc. Such a touch sensitive screen may be based on different touch screen technologies such as resistive systems, capacitive systems, surface acoustic wave systems, infrared systems, etc., all of which involves a transparent substrate at its base.

The transparent optical device element may comprise one or more means for selectively transmitting electromagnetic radiation passing through said deformable lens body.

The one or more means for selectively transmitting electromagnetic radiation may be within the lens body, coated on a surface of the lens body, within the cover member, back window or coated onto one or both.

In some further embodiments, the one or more means for selectively transmitting electromagnetic radiation is in contact with a second surface of the at least one deformable lens body, the second surface being opposite to said first surface.

The one or more means for selectively transmitting electromagnetic radiation passing through the deformable lens body may thus be located onto the second surface being opposite to the first surface.

In some other embodiments, the one or more means for selectively transmitting electromagnetic radiation is in contact with the first surface of the at least one deformable lens body.

The one or more means for selectively transmitting electromagnetic radiation may be located onto the first surface of the at least one deformable lens body.

In some embodiments, the bendable transparent cover member comprises the one or more means for selectively transmitting electromagnetic radiation, such as the one or more means for selectively transmitting electromagnetic radiation is coated onto one or more surfaces of the bendable transparent cover member.

The one or more means for selectively transmitting electromagnetic radiation may be or be included in a coating deposited on the first and/or second surface of the at least one deformable lens body, and/or onto one or more surfaces of the bendable transparent cover member.

The at least one deformable lens body may comprises the one or more means for selectively transmitting electromagnetic radiation.

The one or more means for selectively transmitting electromagnetic radiation may be within the bulk of the at least one deformable lens body.

The one or more means for selectively transmitting electromagnetic radiation may act as a filter in the infrared region, such as below 7 $\mu$m, for example in the Near infrared (N.I.R.) region, for example between 0.75 and 1.4 $\mu$m.

In some other embodiments, the one or more means for selectively transmitting electromagnetic radiation is or comprise a dye or a pigment.

In some further embodiments, the dye is an organic dye.

The one or more means for selectively transmitting electromagnetic radiation may comprise azo compounds, cyanine dyes, anthraquinone, dihydrodiketo anthracene, phthalocyanines, naphthalocyanines, carbocyanines, croconium dyes, squarylium dyes, thiophene based dyes or a combination thereof.

Suitable dyes or pigments may be organometallic complexes comprising transition or post transition metals such as Ni, Co, Ga, Ti, Mn, Zn, In, Cu or a combination thereof.

For example, suitable organometallic complexes may be bis (dithiobenzil) nickel complex or bis((4-dimethylamino) dithiobenzil) nickel complex.

Dyes and pigments may be modified so as to ensure the required solubility, e.g. to allow appropriate solubility into the silicone based polymer of the lens body, keeping the appropriate required softness of the lens body.

For example, azobiscyanopentanamide, croconium dyes squarylium dyes are used, and cyanine dyes have shown the potential of being incorporated in silicone polymer networks.

Optimization in incorporating dyes or pigments into silicone polymers could be directed towards solutions providing high index of refraction, appropriate softness and required IR absorption.

In an embodiment of the module according to the invention, the first and second sensor axis are arranged to be substantially perpendicular to each other. In this way, a module having the minimum thickness for a given second effective focal length, $EFL_2$, may be achieved. This requires that the folding mirror is arranged at an angle of substantially 45 degrees to the second optical axis.

In an embodiment of the module according to the invention, both the first camera assembly and the second camera assembly comprises a tuneable lens. In this way, both camera assemblies may be provided with auto focusing capabilities while maintaining a compact module.

In an embodiment of the module according to the invention, the first camera assembly comprises a voice coil motor, VCM, and the second camera assembly comprises a tuneable lens. In this way, the technologies may be combined, while achieving the advantage of the compact size obtainable with the tuneable lens.

In an embodiment of the module according to the invention, either the second lens assembly or the first lens assembly has a fixed effective focal length. In this way, a simple fixed lens camera assembly may be combined with a camera assembly having the tuneable lens, to provide a simplified module with a low number of parts.

In an embodiment of the module according to the invention, the fixed effective focal length lens is the first lens assembly, and the tuneable lens is comprised by the second lens assembly. In this way, the long lens may be provided with auto focusing while the short lens is fixed, since short effective focal length lenses generally have a longer depth of field (DOF) than long effective focal length lenses. Thus, an acceptable image quality of a combined image from the two camera assemblies may be achieved from a simplified module.

In another embodiment, the long lens is a fixed focus lens assembly and the tuneable lens is comprised in the short lens assembly. Particularly, the fixed focus lens assembly may be focusing at infinity (or at a hyperfocal distance). This configuration may be used for situations where the long lens is used for capturing objects far away, such that the ability to focus close to the lens may be dispensed with. In this way, acceptable image quality and performance may be achieved by a simplified camera module.

In an embodiment of the module according to the invention, the folding mirror of the second camera assembly comprises a beam splitter to allow a part of the incident light to be transmitted through the folding mirror, the folding mirror further being arranged to define a space on a back side of the mirror, the back side being on a side opposite to a beam path of the second camera assembly, the module further comprising a component arranged in the space so as to interact with the transmitted light. In this way, further functionality may be fitted to the module while exploiting dead space under the folding mirror. For modules having multiple folding mirrors, each folding mirror may define a space, which may be used for components in a similar way.

In an embodiment, the beam splitter is a spatial beam splitter such that a fraction of light falling within a certain spatial extend of the folding mirror is transmitted to the back side of the folding mirror, rather than reflected.

In an embodiment, the beam splitter is a dichroic beam splitter, such that a fraction of light having a wavelength falling within a particular wavelength range is transmitted to the back side of the folding mirror, while light having wavelengths falling outside that particular wavelength range is reflected by the folding mirror. In an embodiment, the beam splitter is a polarization dependent splitter, such that a fraction of light having one polarization state is transmitted to the back side of the folding mirror, rather than reflected.

In certain embodiments of the beam splitter, as described in various alternatives above, the fraction of light being transmitted is about 20%, alternatively about 50%, or even about 90%.

In an embodiment of the module according to the invention, the component is chosen from the group of a time of flight device, a laser, a phase detection device, a close loop system, a telemeter, or a rangefinder.

In an embodiment of the module according to the invention, the first camera assembly or the second camera assembly is arranged to provide optical image stabilizing (OIS).

One example of OIS useful in connection with the present invention is described in Chinese Patent publication CN101688976 by the present applicant. The OIS system disclosed in that document provides image stabilization in a tuneable lens by altering the direction of the optical axis through a flexible lens body by activating actuators attached to the flexible lens body, wherein the amount of applied voltages onto the actuators are proportional to signals provided by motion sensors sensing yawing and pitching movements, respectively.

More specifically, the optical image stabilizer according to the publication overcomes the complexity of prior art solutions by providing actuators in contact with a flexible lens body providing a shifting of direction of the optical axis through the lens body, and hence the position of a crossing point between the optical axis and a surface of an image sensor, counteracting the movements of the unintended rapid movements. The shift of optical axis direction is obtained by "squeezing" the flexible lens body by activating the actuators according to control signals provided for by motion sensors, for example a gyroscopic sensor system as known in prior art.

In embodiments of the tuneable lens assembly, the tuneability of the lens assembly is used to provide focusing capabilities, such as auto focus.

In some embodiments, both OIS and focusing may be achieved simultaneously by superimposing the required perturbations of the transparent layer relating to image stabilizing and focusing, respectively.

In other embodiments, focusing and OIS capabilities are divided such that focusing is provided by actuators acting on the transparent layer, for instance, on an object side of the tuneable lens assembly, while OIS is provided by actuators acting on a second transparent layer on an opposite side of the deformable lens body.

In an embodiment of the module according to the invention, an optical image stabilizing assembly is arranged on the optical axis between the lens and the folding mirror of the second camera assembly.

In an embodiment of the module according to the invention, the folding mirror is adjustably mounted for actively adjusting a tilt during use of the second camera assembly. In this way, minute adjustments in the optical axis alignment may be achieved. This may for instance be used to achieve optical image stabilizing.

In an embodiment of the module according to the invention, the second camera assembly comprises two or more folding mirrors. In this way, an even longer effective focal length camera assembly may be wrapped around a perimeter of the first camera assembly, to achieve compact module.

In an embodiment of the module according to the invention, the module comprises a third camera assembly.

In an embodiment of the module according to the invention, the third camera assembly is arranged to have a field of view being substantially 180 degrees away from a field of view of the first camera assembly and/or the second camera assembly. In this way, the third camera assembly may be arranged to capture images on an opposite side of the mobile phone than the first and second camera assembly, e.g. for selfies, video conferencing, etc.

In an embodiment of the module according to the invention, the module has a dimension in at least one direction, such as each of both directions, being parallel with the first optical axis and being equal to or less than 1 cm.

In an embodiment of the module according to the invention, the module has a dimension in at least one direction, such as each of both directions, being parallel with the first optical axis and being equal to or less than 5.5 mm.

In an embodiment of the module according to the invention, the module has a dimension in each of two directions being orthogonal to each other and to the first optical axis and being equal to or less than 2 cm.

In an embodiment of the module according to the invention, the module has a dimension in each of two directions being orthogonal to each other and to the first optical axis and being equal to or less than 12.5 mm.

In an embodiment of the module according to the invention, the first effective focal length, $EFL_{1,}$ is at least 3 mm and/or the second effective focal length, $EFL_{2,}$ is at least 9 mm.

In an embodiment of the module according to the invention, the total track length along the first optical axis, $TTL_1$ is at least 3 mm and/or

- wherein the total track length along the second optical axis, $TTL_2$, is at least 9 mm.

Total track length (TTL) is defined as the distance on an optical axis between the object-side surface of the first lens element and the image sensor, see also patent application WO2015/001440A1 on page 2.

In an embodiment of the module according to the invention, the first effective focal length, $EFL_1$ is at least 5 mm and/or the second effective focal length, $EFL_2$, is at least 15 mm.

In an embodiment of the module according to the invention,

- the total track length along the first optical axis, $TTL_1$ is at least 5 mm and/or
- wherein the total track length along the second optical axis, $TTL_2$, is at least 15 mm.

In an embodiment of the module according to the invention,

- the module has a dimension in at least one direction, such as each of both directions, being parallel with the first optical axis and being equal to or less than 5.5 mm, and
- a dimension in each of two directions being orthogonal to each other and to the first optical axis and being equal to or less than 12.5 mm, and
- the first effective focal length, $EFL_1$ is at least 5 mm and/or the second effective focal length, $EFL_2$, is at least 15 mm.

In an embodiment of the module according to the invention,

- the module has a dimension in at least one direction, such as each of both directions, being parallel with the first optical axis and being equal to or less than 5.5 mm, and
- a dimension in each of two directions being orthogonal to each other and to the first optical axis and being equal to or less than 12.5 mm, and
- the total track length along the first optical axis, $TTL_1$ is at least 5 mm and/or the total track length along the second optical axis, $TTL_2$, is at least 15 mm.

In an embodiment of the module according to the invention, the module comprises a third camera assembly, and wherein

- the module has a dimension in at least one direction, such as each of both directions, being parallel with the first optical axis and being equal to or less than 5.5 mm, and
- the module has a dimension in a first direction being orthogonal to the first optical axis and being equal to or less than 12 mm, and
- the module has a dimension in a second direction being orthogonal to the first optical axis and being orthogonal to the first direction and being equal to or less than 18 mm, and
- the first effective focal length, $EFL_1$ is at least 5 mm and/or the second effective focal length, $EFL_2$, is at least 15 mm.

In an embodiment of the module according to the invention,

- the module has a dimension in at least one direction, such as each of both directions, being parallel with the first optical axis and being equal to or less than 5.5 mm, and
- the module has a dimension in a first direction being orthogonal to the first optical axis and being equal to or less than 12 mm, and
- the module has a dimension in a second direction being orthogonal to the first optical axis and being orthogonal to the first direction and being equal to or less than 18 mm, and
- the total track length along the first optical axis, $TTL_1$ is at least 5 mm and/or the total track length along the second optical axis, $TTL_2$, is at least 15 mm.

In an embodiment of the module according to the invention, a distance between the first optical axis and the second optical axis is equal to or less than 8 mm. The optical axes may be in this specific embodiment, for the purpose of defining the distance, understood to be the optical axis at the point of intersection with the first lens of their respective lens assemblies (such as where these optical axes are parallel).

In an embodiment of the module according to the invention, a distance between the the first optical axis and the second optical axis is equal to or less than 5 mm. The optical axes may be in this specific embodiment, for the purpose of defining the distance, understood to be the optical axis at the point of intersection with the first lens of their respective lens assemblies (such as where these optical axes are parallel).

In an embodiment of the module according to the invention,

- the module has a dimension in at least one direction, such as each of both directions, being parallel with the first optical axis and being equal to or less than 2.70 x $EFL_1$, such as 1.80 x $EFL_1$, and
- a dimension in each of two directions being orthogonal to each other and to the first optical axis and being equal to or less than 3.75 x $EFL_1$.

In an embodiment of the module according to the invention,

- the module has a dimension in at least one direction, such as each of both directions, being parallel with the first optical axis and being equal to or less than 2.70 x $TTL_1$, such as 1.80 x $TTL_1$, and
- a dimension in each of two directions being orthogonal to each other and to the first optical axis and being equal to or less than 3.75 x $TTL_1$

where $TTL_1$ denotes total track length along the first optical axis.
In an embodiment of the module according to the invention,

- the module has a dimension in at least one direction, such as each of both directions, being parallel with the first optical axis and being equal to or less than 0.90 x $EFL_2$, such as 0.60 x $EFL_2$, and
- a dimension in each of two directions being orthogonal to each other and to the first optical axis and being equal to or less than 1.25 x $EFL_2$.

In an embodiment of the module according to the invention,

- the module has a dimension in at least one direction, such as each of both directions, being parallel with the first optical axis and being equal to or less than 0.90 x $TTL_2$, such as 0.60 x $TTL_2$, and
- a dimension in each of two directions being orthogonal to each other and to the first optical axis and being equal to or less than 1.25 x $TTL2$

where $TTL_2$ denotes total track length along the second optical axis.
In an embodiment of the module according to the invention,

- the second effective focal length, $EFL_2$, is less than 15 mm, such as less than 10 mm or such as within [5; 15] mm, such as within [6; 12] mm, such as within [9; 10] mm.

In an embodiment of the module according to the invention,

- the total track length along the second optical axis, $TTL_2$, is less than 15 mm, such as less than 10 mm or such as within [5; 15] mm, such as within [6; 12] mm, such as within [9; 10] mm.

In an embodiment of the module according to the invention, the diagonal of each of the first image sensor and the second image sensor is at least 6 mm.
The different aspects of the present invention may each be combined with any of the other aspects. These and other aspects of the invention will be apparent from and elucidated with reference to the embodiments described hereinafter.

BRIEF DESCRIPTION OF THE FIGURES

The module with cameras according to the invention will now be described in more detail with regard to the accompanying figures. The figures show one way of implementing the present invention and is not to be construed as being limiting to other possible embodiments falling within the scope of the attached claim set.

Figure 1 is a schematic of a tuneable lens, useful as a part of embodiments of the present invention,
Figure 2 illustrates a method of achieving a zoom image from a module according to the invention,
Figure 3 is a schematic of an embodiment of a module comprising two cameras according to the invention,
Figure 4 is a wireframe that illustrates aspects of another embodiment of a module comprising two cameras according to the invention,
Figure 5 is a schematic of a third embodiments of a module comprising two cameras according to the invention,

Figure 6 is a schematic of fourth embodiment of a module comprising three cameras according to the invention,
Figure 7 is a schematic of an fifth embodiment of a module comprising four cameras according to the invention,
Figure 8 is a schematic of an sixth embodiment of a module comprising three cameras according to the invention,
Figure 9 shows a module with a lens assembly with two folding mirrors.

DETAILED DESCRIPTION OF AN EMBODIMENT

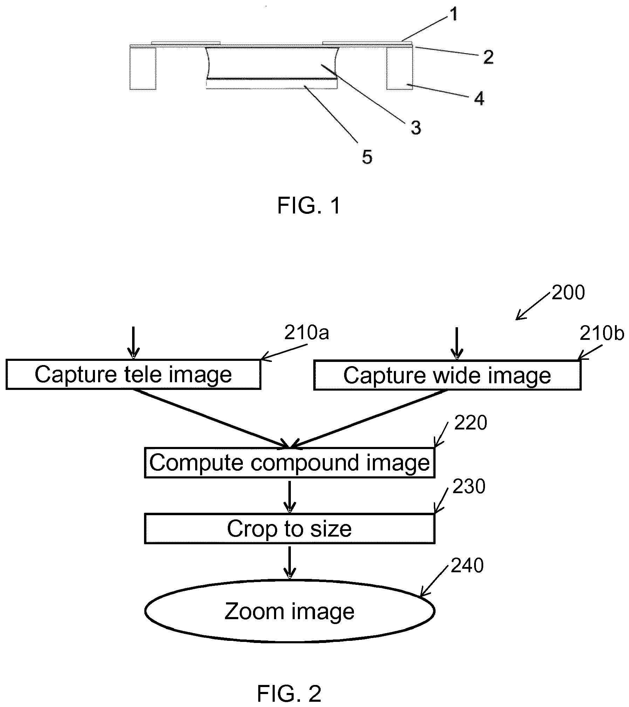

Figure 1 shows a cross-sectional view of an example of a tuneable lens useful as a part of embodiments of the present invention. The tuneable lens comprises a deformable lens body 3 comprising a polymer, actuators 1 arranged on a thin, flexible glass surface 2 supported by continuous or semi-continuous rigid sidewalls 4, and a support, here in the form of a back window 5. This lens is further described in international patent application PCT/EP2014/055391 by the present applicant. The basic principle of the tuneable lens is that by operating the actuators 1 to bend the thin, flexible glass surface 2, and thereby, indirectly, forming the deformable lens body, an optical power of the tuneable lens may be changed.

The thin flexible glass surface 2 and/or the support 5 may have a flat surface facing the lens body. The opposite surface facing away from the lens body of both glass surface 2 and support 5 may be flat or may have a convex or concave, e.g. spherical shape to constitute a backside of the lens. In other embodiments, the back window might be a curved substrate, such as a spherical surface section as well as aspheric shape.

Figure 2 illustrates a method 200 of achieving a zoom image from a module according to the invention. The method relies on capturing both a telephoto image 210a and a wide-angle image 210b of the same scene simultaneously or near simultaneously (to minimize movement between the two images). The two images are then combined by computing a compound image 220. Due to the difference in optical power, the telephoto image will generally cover a smaller area, but with a greater resolution. Therefore, the image data from the telephoto image may be used to improve the resolution of wide-angle image in the overlapping section, by interpolation. The resulting, compound image will then have a high resolution where both the telephoto and the wide angle image overlap, and a lower resolution where only the wide angle capture covers. The zoom image 240 is then achieved from the compound image by cropping to the desired image section, i.e. as commonly known as digital zoom.

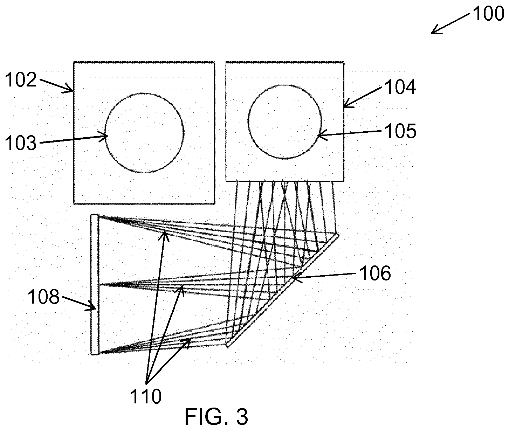

Figure 3 shows a schematic view of the module 100 according to the invention as seen along the optical axis, the module comprising a first camera assembly 102 and a second camera assembly 104. The first camera assembly 102 comprises a first lens assembly 103 and has a first effective focal length, which is shorter than the second effective focal length of the second camera assembly 104. Likewise, the second camera assembly 104 comprises a second lens assembly 105. The second optical axis of the second camera assembly 104 is folded to allow for the long effective focal length while maintaining a shallow depth, as also shown by the raytracing 110 included. In this figure, one folding mirror 106 is seen to fold the second optical axis around the first camera assembly, while another folding mirror is hidden under second lens assembly 105. The first image sensor is hidden under the first lens assembly, while the second image sensor 108 is clearly visible in this view. Not illustrated in this figure is a mechanical frame for fixing the first camera assembly and the second camera assembly in relation to each other. As illustrated here, both camera assemblies of the module comprise a tuneable lens, similar to that shown in figure 1. However, according to the invention, only one of the lens assemblies must be a tuneable lens, while the other lens assembly may be of a conventional type. This choice may be made depending on the desired characteristics of the resulting module, such as cost and image quality.

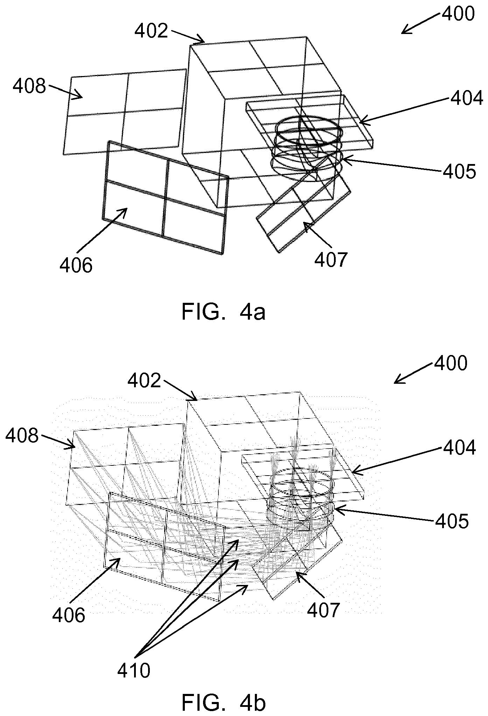

Figures 4a and 4b show wireframe models of another embodiment of the module 400 according to the invention. This embodiment corresponds to the embodiment shown in figure 3, where like reference numerals refer to like parts, and therefore only the differences between the two embodiments are described here. Figure 4b show the module including a raytracing 410 of the second camera assembly 404. To simplify and improve clarity of the figure, the first camera assembly 402 is simply illustrated as a box. With regards to the second camera assembly 404, the figure shows the second lens assembly 405, a first folding mirror 406 and a second folding mirror 407, and the second image sensor 408. According to this embodiment, the folding mirrors 406, 407 are arranged in angles of substantially 45 degrees to the second optical axis, to result in two 90 degree bends upon reflection. This setup is convenient for folding the second optical axis around the first camera assembly 402 so as to minimize the overall foot print of the module 400.

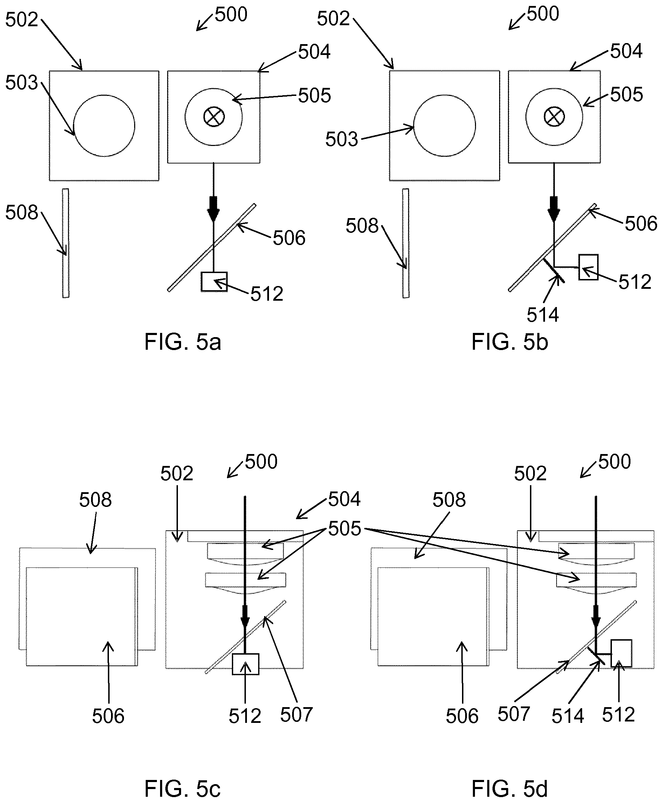

Figure 5 shows different ways to include further functionality to the module 500 according to the invention in a space efficient manner, preferably without increasing the foot print of the module. These embodiments corresponds to those of fig. 3 and fig. 4, where like reference numerals refer to like parts. Thus, only the differences will be described here. Common to these embodiments, extra functionality in the form of a component 512 are included in the modules 500, and more specifically included within the "dead space" behind one of the folding mirrors 506, 507. The component 512 may for instance be a time of flight device, a laser, a phase detection device, or close loop system. Data from such components could then be used to finely adjust the tuneable lens. In some embodiments, the component 512 is part of an optical image stabilizing (OIS) system. Figures 5a and 5b show a similar view point as figure 3, i.e. along the optical axis. The folding mirror 506 is provided as a beam splitter, allowing a fraction of the light incident thereon to be transmitted through the mirror, rather than being reflected towards the second image sensor 508. In figure 5a, the transmitted light is coupled directly into the component 512, while an auxiliary folding mirror 514 is employed in figure 5b. Figures 5c and 5d show an in-plane view, substantially normal to the second image sensor 508. When compared to figures 5a and 5b as just described, the component 512 is located behind the other folding mirror in these embodiments. Otherwise, the embodiments are similar, and may be interchanged, according to the requirements of a specific implementation.

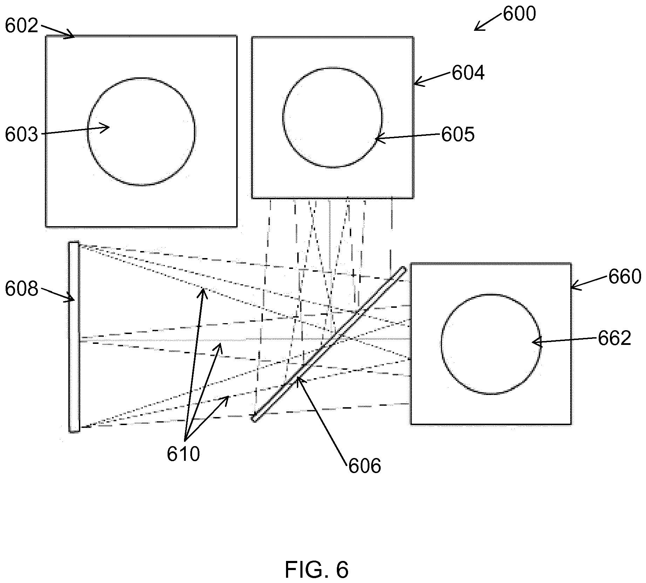

Figure 6 illustrates an embodiment of the module 600 comprising a third camera assembly 660, in addition to the first and second camera assembly 602, 604. Otherwise, this embodiment corresponds to the previously described embodiments, wherein like reference numerals refer to like parts. In this embodiment, the folding mirror 606 must be modified in comparison with the above-described embodiments, to allow for light from the third camera assembly 660 to reach the second image sensor 608. In one variation, the folding mirror 606 is adapted to have a tuneable reflectivity and/or transmittance, so that recording from either the second camera assembly or the third camera assembly may be selected by electronic means. Alternatively, the mirror 606 may be selected as a switching mirror. The inventors envision that the third camera assembly may be used to record images in different wavelength ranges, such as in the Vis-IR, or UV range. In a particular embodiment, the third camera assembly may be adapted to record along an optical axis facing opposite from the first and second optical axis, i.e. extending on an opposite side of the module. In a mobile phone, the first and second camera assemblies could for instance be directed towards the back side of the phone, while the third camera assembly would then be a face camera. When combined with a sensitivity to other wavelength ranges, outside the visible range, such a face camera could be used as a security measure for unlocking the mobile phone e.g. as an iris scanner.

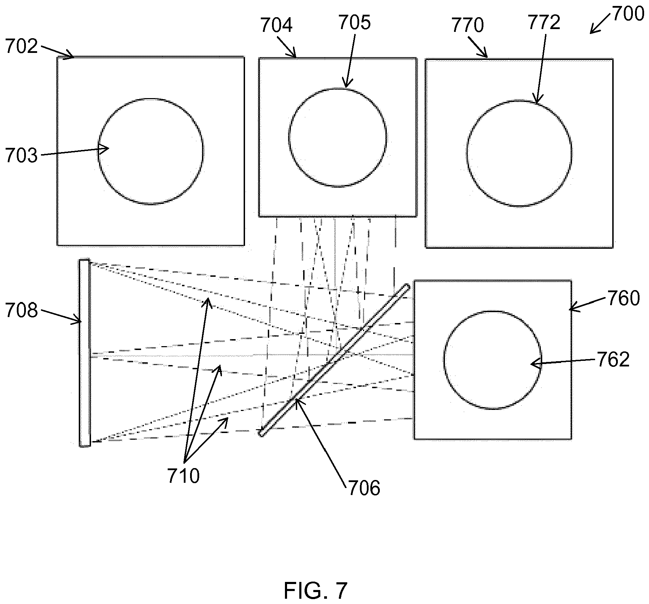

Figure 7 relates to the embodiment shown in figure 6, where like reference numerals refers to like parts. This embodiment show that the design may be pushed even further, i.e. to include a fourth camera assembly 770, having a fourth lens assembly 772. This fourth camera assembly 770 may either be faced in the same direction as the first and second cameral assemblies 702, 704, or be faced in an opposite direction.

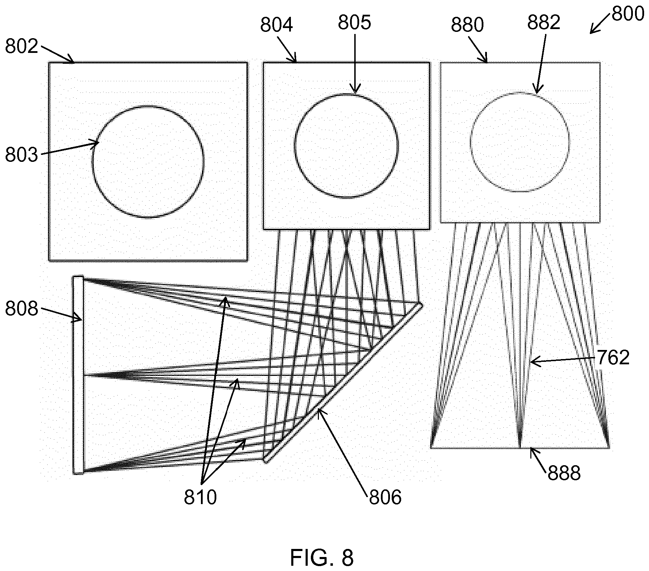

Figure 8 shows an embodiment corresponding to that of figure 6, where like reference numerals refer to like parts. However, in this embodiment, the third camera assembly 880 comprises a separate third image sensor 888. Thus, the folding mirror 806 need not be modified to enable imaging along two optical paths onto the second image sensor 808.

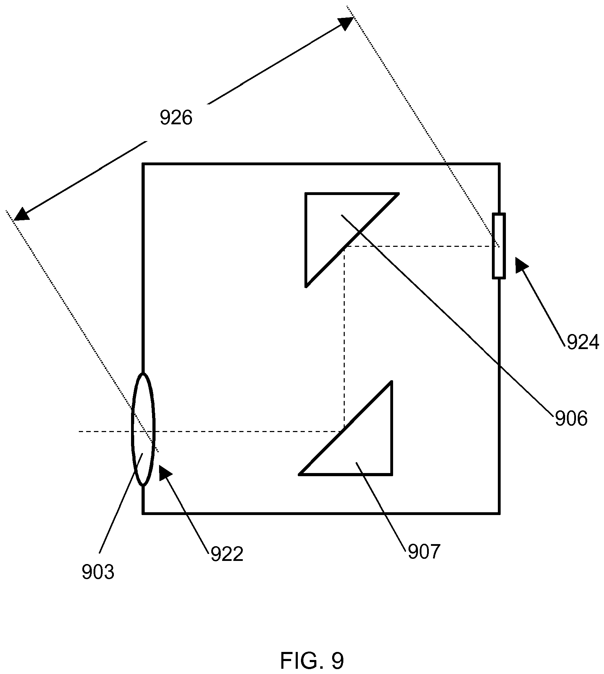

Figure 9 shows a module with a lens assembly with two folding mirrors (906, 907), wherein a largest distance (926) from

a. a first intersection (922) between the second optical axis and the second lens assembly, such as the first point of contact between the optical axis and the lens assembly (such as the first point of contact with the first optical element of the lens assembly) for a photon moving along the optical axis from outside of the second lens assembly and into the second lens assembly, and

b. a second intersection (924) between the second optical axis and the second image sensor, is at least given by

$$\sqrt{\frac{1}{2} * EFL_2^2}.$$

In case the bending mirrors are arranged so that the optical axis between the first and second intersection form a straight line, the said largest distance 926 would be given by $EFL_2$. In case the bending mirrors are arranged so that the optical axis between the first and second intersection form adjacent and opposite sides of right triangle with equidistanly placed vertices (with respect to the right angled corner), the said largest distance 926 would be given by

$$\sqrt{\left(\frac{1}{2} * EFL_2\right)^2 + \left(\frac{1}{2} * EFL_2\right)^2} = \sqrt{\frac{1}{4} * (EFL_2)^2 + \frac{1}{4} * (EFL_2)^2} = \sqrt{\frac{1}{2} * EFL_2^2}.$$

In case the two folding mirrors are arranged as in Fig. 4, and assuming equal distances between the first intersection between the second optical axis and the second lens assembly and the first folding mirror 407, between the first folding mirror 407 and the second folding mirror 406, and between the second folding mirror 406 and the intersection between the second optical axis and the second image sensor 408, then a largest distance from

a. a first intersection between the second optical axis and the second lens assembly, and

b. a second intersection between the second optical axis and the second image sensor,

is given by the diagonal of a cube with side lengths $EFL_2$:

$$\sqrt{\left(\frac{1}{3}*EFL_2\right)^2 + \left(\frac{1}{3}*EFL_2\right)^2 + \left(\frac{1}{3}*EFL_2\right)^2} = \sqrt{\frac{3}{9}*(EFL_2)^2} = \sqrt{\frac{1}{3}*EFL_2}^2 < \sqrt{\frac{1}{2}*EFL_2}^2.$$

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

1. A module (100) with a plurality of cameras for integration in a mobile phone, the module comprising:

   - a first camera assembly (102), comprising a first image sensor and a first lens assembly (103), the first lens assembly being configured for having a first effective focal length, $EFL_1$, the first camera assembly defining a first optical axis and a first sensor axis, the first sensor axis being substantially normal to the first image sensor,
   - a second camera assembly (104) comprising a second image sensor (108) and a second lens assembly (105), the second lens assembly being configured for having a second effective focal length, $EFL_2$, the second camera assembly defining an optical path and a second sensor axis, the second sensor axis being substantially normal to the second image sensor, wherein the first effective focal length is shorter than the second effective focal length, $EFL_1 < EFL_2$, the second camera assembly comprising a folding mirror (106) adapted to fold the optical path between the second lens assembly and the second image sensor,
   - a mechanical frame arranged to carry the first camera assembly and the second camera assembly such that the first optical axis and the optical path are substantially parallel in an object space, wherein

   the first lens assembly or the second lens assembly comprises a tuneable lens having an adjustable effective focal length, the tuneable lens comprising a transparent layer having chosen flexibility, an actuator configured to bend the transparent layer, and a deformable lens body being positioned in contact with the transparent layer at a first surface of the deformable lens body,
   wherein the second camera assembly comprises two or more folding mirrors, wherein the two or more folding mirrors of the second camera assembly (104) are arranged so that segments of the optical path associated with the second camera assembly span a three-dimensional space, wherein the two or more folding mirrors of the second camera assembly (104) are arranged for folding the optical path around the first optical axis and a perimeter of the first camera assembly, where the perimeter surrounds the first optical axis, and wherein the first and second sensor axes are arranged to be substantially perpendicular to each other.

2. The module (100) according to claim 1, wherein the deformable lens body (3) has

   (a) an elastic modulus larger than 300 Pa, thereby avoiding deformation due to gravitational forces in normal operation of said transparent optical device element;
   (b) the refractive index is above 1.35 ;
   (c) the absorbance in the visible range is less than 10% per millimetre thickness of said deformable lens body;

   and said deformable lens body comprises a polymer network of cross-linked or partly cross-linked polymers; and further comprises a miscible oil or combination of oils, thereby increasing the refractive index of said polymer network of cross-linked or partly cross-linked polymers.

3. The module (100) according to any of the preceding claims, wherein both the first camera assembly (102) and the second camera assembly (104) comprises a tuneable lens.

4. The module (100) according to any of the preceding claims, wherein the first camera assembly (102) comprises a voice coil motor, VCM, and the second camera assembly (104) comprises a tuneable lens.

5. The module (100) according to any of the preceding claims, wherein either the second lens assembly (104) or the first lens assembly (102) has a fixed effective focal length.

6. The module (100) according to claim 5, wherein the fixed effective focal length lens is the first lens assembly (102), and the tuneable lens is comprised by the second lens assembly (104).

7. The module (100) according to any of the preceding claims, wherein the folding mirror of the second camera assembly (104) comprises a beam splitter to allow a part of the incident light to be transmitted through the folding mirror, the folding mirror further being arranged to define a space on a back side of the mirror, the back side being on a side opposite to a beam path of the second camera assembly, the module (100) further comprising a component arranged in the space so as to interact with the transmitted light.

8. The module (100) according to claim 7, wherein the component is chosen from the group of a time of flight device, a laser, a phase detection device, a close loop system, a telemeter, a rangefinder.

9. The module (100) according to any of the preceding claims, wherein the first camera assembly (102) or the second camera assembly (104) is arranged to provide optical image stabilizing (OIS).

10. The module (100) according to claim 9, wherein an optical image stabilizing assembly is arranged on the optical axis between the lens and the folding mirror of the second camera assembly (104).

11. The module (100) according to any of the preceding claims, wherein the folding mirror (106) is adjustably mounted for actively adjusting a tilt during use of the second camera assembly (104).

12. The module (100) according to any of the preceding claims, wherein the module comprises a third camera assembly.

13. The module (100) according to any of the preceding claims, wherein

- the first effective focal length, $EFL_1$, is at least 3 mm and/or
- wherein the second effective focal length, $EFL_2$, is at least 9 mm.

14. The module (100) according to any of the preceding claims, wherein

- the total track length along the first optical axis, $TTL_1$ is at least 3 mm and/or
- wherein the total track length along the optical path, $TTL_2$, is at least 9 mm.

15. The module (100) according to any of the preceding claims, wherein

- the first effective focal length, $EFL_1$, is at least 5 mm and/or
- wherein the second effective focal length, $EFL_2$, is at least 15 mm.


**Patentansprüche**

1. Modul (100) mit einer Vielzahl von Kameras zur Integration in ein Mobiltelefon, das Modul umfassend:

- eine erste Kameraanordnung (102), umfassend einen ersten Bildsensor und eine erste Linsenanordnung (103), wobei die erste Linsenanordnung dazu konfiguriert ist, eine erste effektive Brennweite, $EFL_1$, aufzuweisen, wobei die erste Kameraanordnung eine erste optische Achse und eine erste Sensorachse definiert, wobei die erste Sensorachse im Wesentlichen normal zu dem ersten Bildsensor ist,
- eine zweite Kameraanordnung (104), umfassend einen zweiten Bildsensor (108) und eine zweite Linsenanordnung (105), wobei die zweite Linsenanordnung dazu konfiguriert ist, eine zweite effektive Brennweite, $EFL_2$, aufzuweisen, wobei die zweite Kameraanordnung einen optischen Pfad und eine zweite Sensorachse definiert, wobei die zweite Sensorachse im Wesentlichen normal zu dem zweiten Bildsensor ist, wobei die erste effektive Brennweite kürzer als die zweite effektive Brennweite ist, $EFL_1 < EFL_2$, die zweite Kameraanordnung umfassend einen Faltungsspiegel (106), der dazu angepasst ist, den optischen Pfad zwischen der zweiten Linsenanordnung und dem zweiten Bildsensor zu falten,
- einen mechanischen Rahmen, der dazu angeordnet ist, die erste Kameraanordnung und die zweite Kameraanordnung zu tragen, so dass die erste optische Achse und der optische Pfad im Wesentlichen parallel in einem Objektraum verlaufen, wobei

die erste Linsenanordnung oder die zweite Linsenanordnung eine einstellbare Linse mit einer anpassbaren effektiven Brennweite, die einstellbare Linse umfassend eine transparente Schicht mit einer gewählten Flexibilität, ein Betätigungselement, das dazu konfiguriert ist, die transparente Schicht zu biegen, und einen verformbaren Linsenkörper, der auf einer ersten Fläche des verformbaren Linsenkörpers in Kontakt mit der transparenten Schicht positioniert ist, umfasst,

wobei die zweite Kameraanordnung zwei oder mehr Faltungsspiegel umfasst, wobei die zwei oder mehr Faltungsspiegel der zweiten Kameraanordnung (104) so angeordnet sind, dass Segmente des optischen Pfads, die mit der zweiten Kameraanordnung assoziiert sind, einen dreidimensionalen Raum erzeugen, wobei die zwei oder mehr Faltungsspiegel der zweiten Kameraanordnung (104) zum Falten des optischen Pfads um die erste optische Achse und einen Umfang der ersten Kameraanordnung angeordnet sind, wobei der Umfang die erste optische Achse umgibt und wobei die erste und die zweite Sensorachse so angeordnet sind, dass sie im Wesentlichen senkrecht zueinander sind.

2. Modul (100) nach Anspruch 1, wobei der verformbare Linsenkörper (3) Folgendes aufweist:

(a) einen E-Modul größer als 300 Pa, wodurch eine Verformung aufgrund von Gravitationskräften beim normalen Betrieb des transparenten Elements der optischen Vorrichtung vermieden wird;
(b) der Brechungsindex ist größer als 1,35;
(c) die Absorbanz im sichtbaren Bereich ist kleiner als 10 % pro Millimeter der Dicke des verformbaren Linsenkörpers;

und der verformbare Linsenkörper umfasst ein Polymernetz aus quervernetzten und teilweise quervernetzten Polymere; und umfasst ferner ein mischbares Öl oder eine Kombination von Öle, wodurch der Brechungsindex des Polymernetzwerks von quervernetzten oder teilweise quervernetzten Polymeren erhöht wird.

3. Modul (100) nach einem der vorhergehenden Ansprüche, wobei sowohl die erste Kameraanordnung (102) als auch die zweite Kameraanordnung (104) eine einstellbare Linse umfassen.

4. Modul (100) nach einem der vorhergehenden Ansprüche, wobei die erste Kameraanordnung (102) einen Tauchspulenmotor (voice coil motor, VCM) umfasst und die zweite Kameraanordnung (104) eine einstellbare Linse umfasst.

5. Modul (100) nach einem der vorhergehenden Ansprüche, wobei eine von der zweiten Linsenanordnung (104) oder der ersten Linsenanordnung (102) eine fest effektive Brennweite aufweist.

6. Modul (100) nach Anspruch 5, wobei die Linse mit der festen effektiven Brennweite die erste Linsenanordnung (102) ist und die einstellbare Linse durch die zweite Linsenanordnung (104) umfasst ist.

7. Modul (100) nach einem der vorhergehenden Ansprüche, wobei der Faltungsspiegel der zweiten Kameraanordnung (104) einen Strahlteiler umfasst, um es einem Teil des einfallenden Lichts zu ermöglichen, durch den Faltungsspiegel übertragen zu werden, wobei der Faltungsspiegel ferner dazu angeordnet ist, einen Raum an einer Rückseite des Spiegels zu definieren, wobei sich die Rückseite auf einer Seite gegenüber einem Strahlpfad der zweiten Kameraanordnung befindet, das Modul (100) ferner umfassend eine Komponente, die in dem Raum so angeordnet ist, um mit dem übertragenen Licht zu interagieren.

8. Modul (100) nach Anspruch 7, wobei die Komponente aus der Gruppe bestehend aus einer Laufzeitvorrichtung, einem Laser, einer Phasendetektionsvorrichtung, einem System mit geschlossenem Kreislauf, einem Telemeter, einem Entfernungsmesser ausgewählt ist.

9. Modul (100) nach einem der vorhergehenden Ansprüche, wobei die erste Kameraanordnung (102) oder die zweite Kameraanordnung (104) dazu angeordnet ist, eine optische Bildstabilisierung (optical image stabilizing - OIS) bereitzustellen.

10. Modul (100) nach Anspruch 9, wobei die optische Bildstabilisierungsanordnung auf der optischen Achse zwischen der Linse und dem Faltungsspiegel der zweiten Kameraanordnung (104) angeordnet ist.

**11.** Modul (100) nach einem der vorhergehenden Ansprüche, wobei der Faltungsspiegel (106) anpassbar zum aktiven Anpassen einer Neigung während der Verwendung der zweiten Kameraanordnung (104) befestigt ist.

**12.** Modul (100) nach einem der vorhergehenden Ansprüche, wobei das Modul eine dritte Kameraanordnung umfasst.

**13.** Modul (100) nach einem der vorhergehenden Ansprüche, wobei

- die erste effektive Brennweite, $EFL_1$, zumindest 3 mm beträgt und/oder
- wobei die zweite effektive Brennweite, $EFL_2$, zumindest 9 mm beträgt.

**14.** Modul (100) nach einem der vorhergehenden Ansprüche, wobei

- die gesamte Streckenlänge entlang der ersten optischen Achse, $TTL_1$, zumindest 3 mm beträgt und/oder
- wobei die gesamte Streckenlänge entlang des optischen Pfads, $TTL_2$, zumindest 9 mm beträgt.

**15.** Modul (100) nach einem der vorhergehenden Ansprüche, wobei

- die erste effektive Brennweite, $EFL_1$, zumindest 5 mm beträgt und/oder
- wobei die zweite effektive Brennweite, $EFL_2$, zumindest 15 mm beträgt.


**Revendications**

**1.** Module (100) avec une pluralité de caméras à intégrer dans un téléphone mobile, le module comprenant :

- un premier ensemble caméra (102), comprenant un premier capteur d'image et un premier ensemble lentille (103), le premier ensemble lentille étant conçu pour posséder une première distance focale effective, $EFL_1$, le premier ensemble caméra définissant un premier axe optique et un premier axe de capteur, le premier axe de capteur étant sensiblement normal au premier capteur d'image,
- un deuxième ensemble caméra (104) comprenant un second capteur d'image (108) et un second ensemble lentille (105), le second ensemble lentille étant conçu pour posséder une seconde distance focale effective, $EFL_2$, le deuxième ensemble caméra définissant un chemin optique et un second axe de capteur, le second axe de capteur étant sensiblement normal au second capteur d'image, ladite première distance focale effective étant plus courte que la seconde distance focale effective, $EFL_1 < EFL_2$, le deuxième ensemble caméra comprenant un miroir pliant (106) adapté pour plier le chemin optique entre le second ensemble lentille et le second capteur d'image,
- un cadre mécanique agencé pour porter le premier ensemble caméra et le deuxième ensemble caméra de sorte que le premier axe optique et le chemin optique soient sensiblement parallèles dans un espace objet,

ledit premier ensemble lentille ou ledit second ensemble lentille comprenant une lentille ajustable possédant une distance focale effective réglable, la lentille ajustable comprenant une couche transparente possédant une flexibilité choisie, un actionneur conçu pour courber la couche transparente, et un corps de lentille déformable étant positionné en contact avec la couche transparente au niveau d'une première surface du corps de lentille déformable,
ledit deuxième ensemble caméra comprenant deux miroirs pliants, ou plus, lesdits deux miroirs pliants, ou plus, du deuxième ensemble caméra (104) étant agencés afin que les segments du chemin optique associé au deuxième ensemble caméra s'étendent sur un espace tridimensionnel, lesdits deux miroirs pliants, ou plus, du deuxième ensemble caméra (104) étant agencés pour plier le chemin optique autour du premier axe optique et d'un périmètre du premier ensemble caméra, où le périmètre entoure le premier axe optique, et lesdits premier et second axes de capteur étant agencés pour être sensiblement perpendiculaires l'un à l'autre.

**2.** Module (100) selon la revendication 1, ledit corps de lentille déformable (3) possédant

(a) un module élastique supérieur à 300 Pa, évitant ainsi une déformation due aux forces gravitationnelles en fonctionnement normal dudit élément de dispositif optique transparent ;
(b) l'indice de réfraction est supérieur à 1,35 ;
(c) l'absorbance dans la plage visible est inférieure à

10 % par millimètre d'épaisseur dudit corps de lentille déformable ;
et ledit corps de lentille déformable comprenant un réseau polymère de polymères réticulés ou partiellement réticulés ; et comprenant en outre une huile ou une combinaison d'huiles miscibles, augmentant ainsi l'indice de réfraction dudit réseau polymère de polymères réticulés ou partiellement réticulés.

3. Module (100) selon l'une quelconque des revendications précédentes, ledit premier ensemble caméra (102) et ledit deuxième ensemble caméra (104) comprenant un lentille ajustable.

4. Module (100) selon l'une quelconque des revendications précédentes, ledit premier ensemble caméra (102) comprenant un moteur à bobine mobile, VCM, et ledit deuxième ensemble caméra (104) comprenant un lentille ajustable.

5. Module (100) selon l'une quelconque des revendications précédentes, soit ledit deuxième ensemble lentille (104) soit le premier ensemble lentille (102) possédant une distance focale effective fixe.

6. Module (100) selon la revendication 5, ladite lentille à distance focale effective fixe étant le premier ensemble lentille (102), et ladite lentille ajustable étant comprise par le second ensemble lentille (104).

7. Module (100) selon l'une quelconque des revendications précédentes, ledit miroir pliable du deuxième ensemble caméra (104) comprenant un diviseur de faisceau pour permettre à une partie de la lumière incidente d'être émise à travers le miroir pliant, le miroir pliant étant en outre agencé pour définir un espace sur un côté arrière du miroir, le côté arrière étant sur un côté opposé à un chemin de faisceau du deuxième ensemble caméra, le module (100) comprenant en outre un composant agencé dans l'espace de façon à interagir avec le lumière émise.

8. Module (100) selon la revendication 7, ledit composant étant choisi dans le groupe d'un dispositif de temps de vol, un laser, un dispositif de détection de phase, un système en boucle fermée, un télémètre, un distancemètre.

9. Module (100) selon l'une quelconque des revendications précédentes, ledit premier ensemble caméra (102) ou ledit deuxième ensemble caméra (104) étant agencé pour fournir une stabilisation d'image optique (OIS).

10. Module (100) selon la revendication 9, un ensemble de stabilisation d'image optique étant agencé sur l'axe optique entre la lentille et le miroir pliant du deuxième ensemble caméra (104).

11. Module (100) selon l'une quelconque des revendications précédentes, ledit miroir pliable (106) étant monté de manière réglable en vue du réglage de manière active d'une inclinaison durant l'utilisation du deuxième ensemble caméra (104).

12. Module (100) selon l'une quelconque des revendications précédentes, ledit module comprenant un troisième ensemble caméra.

13. Module (100) selon l'une quelconque des revendications précédentes,

- la première distance focale effective, $EFL_1$, étant supérieure ou égale à 3 mm
et/ou
- ladite seconde distance focale effective, $EFL_2$, étant supérieure ou égale à 9 mm.

14. Module (100) selon l'une quelconque des revendications précédentes,

- ladite longueur de chemin totale le long du premier axe optique, $TTL_1$, étant supérieure ou égale à 3 mm
et/ou
- ladite longueur de chemin totale le long du chemin optique, $TTL_2$, étant supérieure ou égale à 9 mm.

15. Module (100) selon l'une quelconque des revendications précédentes,

- ladite première distance focale effective, $EFL_1$, étant supérieure ou égale à 5 mm
et/ou
- ladite seconde distance focale effective, $EFL_2$, étant supérieure ou égale à 15 mm.

1

2

4

3

5

FIG. 1

200

210a
Capture tele image

210b
Capture wide image

220
Compute compound image

230
Crop to size

240
Zoom image

FIG. 2

FIG. 3

FIG. 4a

FIG. 4b

502

503

508

500

504

505

508

506

512

FIG. 5a

502

503

508

500

504

505

506

512

514

FIG. 5b

508

506

502

500

504

505

512   507

FIG. 5c

508

506   507   514   512

502

500

505

FIG. 5d

FIG. 6

FIG. 7

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005253951 A1
- WO 2014147060 A1
- WO 2015058157 A1
- EP 2014055391 W
- CN 101688976
- WO 2015001440 A1